(19) Europäisches Patentamt
European Patent Office
Office européen des brevets

(11) **EP 1 898 516 A2**

(12) **EUROPEAN PATENT APPLICATION**

(43) Date of publication:
**12.03.2008 Bulletin 2008/11**

(51) Int Cl.:
***H02M 7/48*** (2007.01)

(21) Application number: **07114111.3**

(22) Date of filing: **09.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **10.08.2006 JP 2006218630**
**26.06.2007 JP 2007167553**

(71) Applicant: **KABUSHIKI KAISHA TOYOTA JIDOSHOKKI**
**Kariya-shi,**
**Aichi-ken (JP)**

(72) Inventors:
• **Suzuki, Sadanori**
**Kariya-shi Aichi 448-8671 (JP)**
• **Takeuchi, Takashi**
**Kariya-shi Aichi 448-8671 (JP)**
• **Tabata, Hirotaka**
**Kariya-shi Aichi 448-8671 (JP)**

(74) Representative: **TBK-Patent**
**Bavariaring 4-6**
**80336 München (DE)**

(54) **Inverter device and method for designing duty cycle setting section of inverter device**

(57) An inverter device (11) has a DC/AC inverter section (13) that converts input DC voltage ($V_H$) into AC voltage ($V_{AC}$) with a rectangular wave and outputs the AC voltage ($V_{AC}$). A duty cycle setting section (19) sets a duty cycle ($t_{ON}/T$) for controlling turning on and off of a switching element (Q1, Q2, Q3, Q4) of the DC-AC inverter section (13) by a controller (18). The duty cycle setting section (19) determines the duty cycle ($t_{ON}/T$) using a signal (Vc) based on the value of the DC voltage ($V_H$) and a charging curve (G) determined by a CR circuit (29). Accordingly, regardless of changes in the input voltage ($V_H$), the effective value of the output voltage ($V_{AC}$) approximates to a theoretical value compared to the conventional art.

# Fig.2

**Description**

BACKGROUND OF THE INVENTION

The present invention relates to an inverter device that outputs an AC voltage of a rectangular wave and a method for designing a duty cycle setting section of an inverter device.

Some recent models of vehicles include an inverter device that converts voltage of a battery mounted in the vehicle into voltage used in home appliances, which is, for example, AC voltage of single-phase 100V or 120V. Such an inverter device, or a DC/AC inverter device, includes a DC/AC inverting circuit. However, since a conventional inverter device changes output voltage in proportion with fluctuation of input voltage, the effective value of the output voltage cannot be maintained constant. To solve this problem, Japanese Laid-Open Patent Publication No. 2000-209867 discloses an inverter device that maintains a constant effective value of output voltage regardless of fluctuation of input voltage. The inverter device outputs an AC rectangular wave and includes a D/A inverting section, an output voltage detecting section, and a duty cycle control section. The duty cycle control section controls the duty cycle of the output voltage, which is an output period or output suspending period, at an output of the D/A inverting section, in accordance with the voltage detected by the output voltage detecting section. This maintains the effective value of the output voltage at a constant level. Although the aforementioned document does not mention a specific method for determining the duty cycle, it is assumed that the duty cycle is determined by means of a microcomputer based on the description of the embodiment.

Alternatively, a method for determining the duty cycle without using a microcomputer but solely with hardware is known. In this case, as in typical pulse width modulation control (PWM control), the width of the rectangular wave is determined through comparison between a voltage of a signal based on an output waveform and a voltage of a signal based on a triangular or sawtooth wave.

As has been described, it is assumed that the inverter device of Japanese Laid-Open Patent Publication No. 2000-209867 determines the duty cycle using a microcomputer. However, in this case, prolonged time and increased cost are necessary for developing a software program, in accordance with which the duty cycle is determined.

To avoid the use of a microcomputer in determination of a duty cycle, the width of the rectangular wave may be determined through comparison between the voltage of the signal based on the rectangular wave and the voltage of the signal based on the triangular or sawtooth wave. However, in this case, the accuracy of the effective value of the output voltage of the inverter device becomes low. That is, there is a large error between a target value and the design value of the effective value of the output voltage.

SUMMARY OF THE INVENTION

Accordingly, it is an objective of the present invention to provide an inverter device that allows the effective value of output voltage to approximate to a theoretical value regardless of changes in input voltage, compared to the conventional art. It is another objective of the present invention to provide a method for designing a duty cycle setting section of an inverter device.

According to one aspect of the invention, an inverter device including a DC/AC inverter section is provided. The DC/AC inverter section converts an input DC voltage into an AC voltage of a rectangular wave and outputs the AC voltage. The DC/AC inverter section has a switching element. A controller controls turning on and off of the switching element. A duty cycle setting section sets a duty cycle for control of the switching element by the controller. The duty cycle setting section has a CR circuit. The duty cycle setting section determines the duty cycle using a signal based on the value of the DC voltage and a charging curve determined by the CR circuit.

According to another aspect of the invention, a method for designing a duty cycle setting section of an inverter device is provided. The inverter device includes a DC/DC converter section and a DC/AC inverter section. The DC/DC converter section generates a DC voltage by converting a power supplied from a DC voltage source. The DC/AC inverter section converts the DC voltage into an AC voltage with a rectangular wave and outputs the AC voltage. The duty cycle setting section sets a duty cycle for controlling turning on and off of a switching element of the DC/AC inverter section. The method includes calculating a theoretical value of the duty cycle in such a manner that an effective value of an output voltage becomes a target value when the DC voltage is changed in a predetermined range. The method further includes calculating a duty cycle determined in correspondence with a designing parameter for setting the duty cycle for each one of the values in the predetermined range; determining a proportion of an error between the theoretical value and the duty cycle obtained using the designing parameter with respect to the theoretical value; and setting the designing parameter in such a manner that the proportion falls in a target range for each one of the values in the predetermined range.

BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:

Fig. 1 is a circuit diagram representing an AC inverter according to a first embodiment of the present invention;
Fig. 2 is a circuit diagram representing a duty cycle setting section shown in Fig. 1;
Fig. 3 is a graph representing the output waveform of the AC inverter shown in Fig. 1;
Fig. 4 is a graph representing the output waveform of a comparator shown in Fig. 2;
Fig. 5 is a graph representing the output waveform of a CR circuit shown in Fig. 2;
Fig. 6 is a graph representing the relationship between changes in input voltage and the duty cycle;
Fig. 7 is a circuit diagram representing a duty cycle setting section including a triangular wave generating circuit of the respective one of a first comparative example and a second comparative example;
Fig. 8 is a graph representing the triangular wave output by the triangular wave generating circuit of Fig. 7; and
Fig. 9 is a circuit diagram representing a curve generating circuit according to a second embodiment of the present invention.

DETAILED DESCRIPTION OF PREFERRED EMBODIMENTS

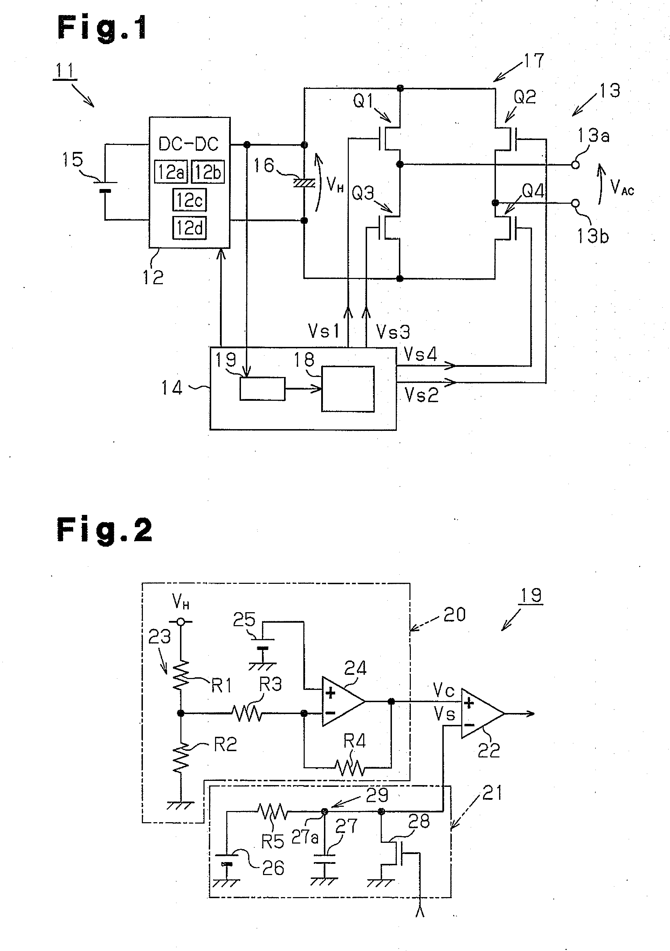

Figs. 1 to 8 illustrate a first embodiment of the present invention.

Fig. 1 represents an AC inverter 11, which is an inverter device according to the first embodiment. The AC inverter 11 is a DC/AC inverter device mounted in a vehicle. Referring to Fig. 1, the AC inverter 11 has a DC/DC converter section 12, a DC/AC inverter section 13, and a controller 14. A battery 15, or a DC voltage source, is mounted in the vehicle. The DC/DC converter section 12 steps up the voltage of the battery 15, which is, for example, DC 12 V, to DC voltage $V_H$ higher than the battery voltage. The DC/AC inverter section 13 converts the DC voltage $V_H$ into AC voltage $V_{ac}$ and outputs the AC voltage $V_{ac}$ to a pair of output terminals 13a, 13b. In this manner, the AC inverter 11 supplies the power of the battery 15 to load devices (not shown).

The DC/DC converter section 12 includes a pair of switching elements 12a, 12b, a step-up transformer 12c, and a rectifier circuit 12d. The controller 14 controls switching of the switching elements 12a, 12b in such a manner that the DC voltage of the battery 15 is stepped up to the DC voltage $V_H$. In the first embodiment, the DC voltage $V_H$ corresponds to any value from 100 V to 155 V in correspondence with the voltage of the battery 15. An electrolytic capacitor 16 is connected in parallel with the DC/DC converter section 12.

As illustrated in Fig. 1, the DC/AC inverter section 13 has an H-bridge circuit 17 formed by a first switching element Q1, a second switching element Q2, a third switching element Q3, and a fourth switching element Q4. The first and second switching elements Q1, Q2 are connected to a positive terminal of the electrolytic capacitor 16. The third and fourth switching elements Q3, Q4 are connected to a negative terminal, or a grounding terminal, of the electrolytic capacitor 16. The first to fourth switching elements Q1 to Q4 are each formed by an n-channel MOSFET. The controller 14 controls switching of the first to fourth switching elements Q1 to Q4 in such a manner as to invert the DC voltage $V_H$ to the AC voltage $V_{AC}$. A coil and a capacitor (neither is shown), which form a filter circuit, are connected to an output of the H-bridge circuit 17.

With reference to Fig. 1, the controller 14 has a control section 18 and a duty cycle setting section 19. The duty cycle setting section 19 sets the duty cycle for control of the first to fourth switching elements Q1 to Q4 by the control section 18. The control section 18 controls turning on and off of the first to fourth switching elements Q1 to Q4 in accordance with the duty cycle that has been set in correspondence with an output signal provided by the duty cycle setting section 19. The control section 18 generates a first drive signal Vs1, a second drive signal Vs2, a third drive signal Vs3, and a fourth drive signal Vs4. In accordance with the first to fourth drive signals Vs1 to Vs4, a set of the first and fourth switching elements Q1, Q4 and a set of the second and third switching elements Q2, Q3 are turned on and off alternately at a predetermined cycle. The control section 18 outputs each of the first to fourth drive signals Vs1 to Vs4 to the corresponding one of the first to fourth switching elements Q1 to Q4. The first to fourth drive signals Vs1 to Vs4 are each input to the control terminal of the corresponding switching element Q1 to Q4, or, in the first embodiment, the gate of the corresponding MOSFET.

Referring to Fig. 2, the duty cycle setting section 19 has a signal generating circuit 20, a curve generating circuit 21, and a comparator 22. The signal generating circuit 20 generates a reference voltage Vc based on the value of the DC voltage $V_H$ input to the DC/AC inverter section 13. In other words, the signal generating circuit 20 is a circuit generating a signal corresponding to a voltage, which produces the reference voltage Vc corresponding to the value of the output voltage ($V_H$) of the DC/DC converter section 12. The signal generating circuit 20 includes a voltage dividing circuit 23 and an operational amplifier 24. The voltage dividing circuit 23 has a first resistor R1 and a second resistor R2, which divide the DC voltage $V_H$, which is supplied to the DC/AC inverter section 13. The inverting input terminal of the operational amplifier 24 is connected to the output terminal of the operational amplifier 24 through a fourth resistor R4, as well as to a connection point of the second resistor R2 with respect to the first resistor R1 through a third resistor R3. The non-inverting input terminal of the operational amplifier 24 is connected to a first constant voltage source 25. The reference voltage Vc, or the output of the operational amplifier 24, is supplied to the non-inverting input terminal of the comparator 22.

The curve generating circuit 21 is a charging curve generating circuit that generates a charging curve G. In other words, the curve generating circuit 21 is a circuit that determines the charging curve G. Referring to Fig. 2, the curve generating circuit 21 has a capacitor 27 and a period setting switching element 28. The capacitor 27 is connected in series with a second constant voltage source 26 through a fifth resistor R5. The period setting switching element 28 is connected to a connection point 27a of the capacitor 27 with respect to the fifth resistor R5. The fifth resistor R5 and the capacitor 27 form an integrating circuit 29, or a CR circuit. That is, the period setting switching element 28 is connected to the second constant voltage source 26 through the integrating circuit 29. The period setting switching element 28 is formed by an n-channel MOSFET. The drain of the period setting switching element 28 is connected to the connection point 27a of the capacitor 27 with respect to the fifth resistor R5 and the inverting input terminal of the comparator 22. The source of the period setting switching element 28 is grounded. An ON signal is input to the gate of the period setting switching element 28 each time a period T elapses. The period T corresponds to a half of a switching period 2T of the first to fourth switching elements Q1 to Q4.

The comparator 22 compares the output signal (Vc) of the signal generating circuit 20 with the output signal (Vs) of the curve generating circuit 21. If the output signal (Vc) of the signal generating circuit 20, or the output signal of the operational amplifier 24, exceeds the output signal (Vs) of the curve generating circuit 21, the comparator 22 outputs a high-level signal. The comparator 22 otherwise outputs a low-level signal.

Operation of the AC inverter 11 will hereafter be explained.

When the start switch of the AC inverter 11 is turned on, control of switching of the switching elements 12a, 12b of the DC/DC converter section 12 is started. As a result, an AC voltage exceeding the voltage of the battery 15 is generated in a secondary coil of the transformer 12c. The AC voltage is inverted to the DC voltage $V_H$ higher than the voltage of the battery 15 by the rectifier circuit 12d. The DC voltage $V_H$ is then supplied to the DC/AC inverter section 13. In the first embodiment, the DC/DC converter section 12 is configured in such a manner that the value of the DC voltage $V_H$ changes in correspondence with the voltage of the battery 15. In other words, the DC voltage $V_H$ is substantially equal to the value obtained by multiplying the voltage of the battery 15 by the turns ratio of the transformer 12c.

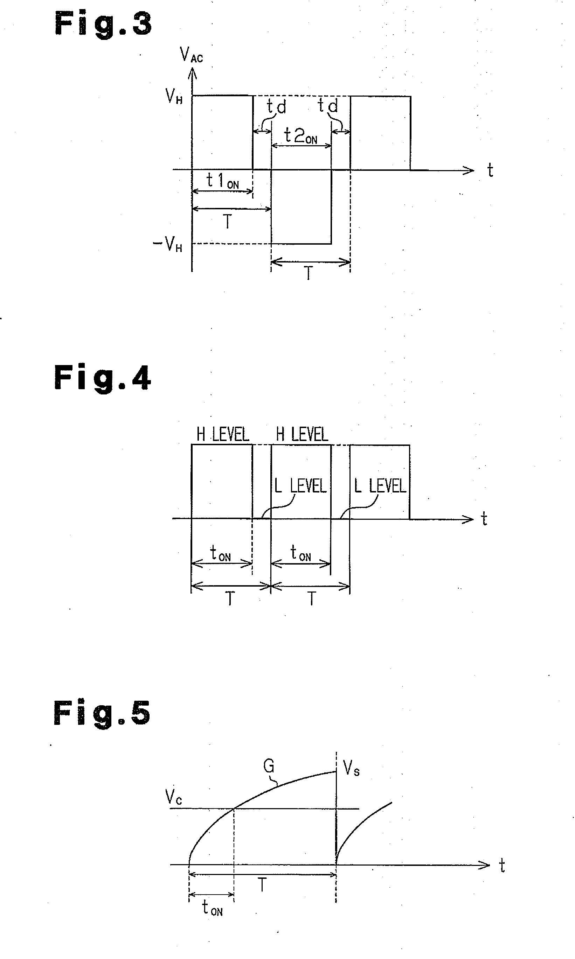

The set of the first and fourth switching elements Q1, Q4 and the set of the second and third switching elements Q2, Q3 are turned on and off alternately at the frequency of commercial alternating current, which is, for example, 60 Hz. Specifically, referring to Fig. 3, the first and fourth switching elements Q1, Q4 are turned on in a first duration $t1_{ON}$. The second and third switching elements Q2, Q3 are turned on in a second duration $t2_{ON}$. The first duration $t1_{ON}$ and the second duration $t2_{ON}$ repeatedly alternate while a third period td is set between the first and second durations $t1_{ON}$, $t2_{ON}$. The control section 18 outputs the first to fourth drive signals Vs1 to Vs4 in accordance with the timings represented in Fig. 3. In other words, the first to fourth switching elements Q1 to Q4 repeatedly perform the operation represented in Table 1 in each of the first, second, and third durations $t1_{ON}$, $t1_{ON}$, td.

Table 1

|  | Q1 | Q2 | Q3 | Q4 |
|---|---|---|---|---|
| Duration $t1_{ON}$ | ON | OFF | OFF | ON |
| Duration $t2_{ON}$ | OFF | ON | ON | OFF |
| Duration td | OFF | OFF | OFF | OFF |

The first and second durations $t1_{ON}$, $t2_{ON}$ are adjusted in such a manner that the effective value of the output voltage of the DC/AC inverter section 13 becomes a target value, which is 100 V in the first embodiment, in correspondence with the output voltage of the DC/DC converter section 12, or the DC voltage $V_H$. This causes the AC inverter 11 to output DC voltage with an effective value of 100 V, regardless of fluctuation of the input voltage ($V_H$) input to the DC/AC inverter section 13.

The duty cycle of the first to fourth switching elements Q1 to Q4 is set by the duty cycle setting section 19. The "duty cycle" can be understood as a period in which any of the first to fourth switching elements Q1 to Q4 is turned on. When the start switch of the AC inverter 11 is turned on, the signal generating circuit 20 inputs the reference voltage Vc corresponding to the DC voltage $V_H$ to the non-inverting input terminal of the comparator 22. The voltage Vs generated in correspondence with the charging time of the capacitor 27 and the integrating circuit 29 is input to the inverting input terminal of the comparator 22. If the condition: Vc > Vs is satisfied, the high-level signal is provided from the comparator 22. If the condition: Vc ≤ Vs is satisfied, the low-level signal is provided from the comparator 22.

The period setting switching element 28 receives an ON signal each time the period T, which is a half of the switching period 2T of the first to fourth switching elements Q1 to Q4, elapses. As a result, substantially at the same time as the ON signal is input, or after the capacitor 27 is discharged instantly, the second constant voltage source 26 starts charging of the capacitor 27. The voltage Vs supplied to each of the two ends of the capacitor 27 reaches the reference voltage Vc after the duration $t_{ON}$ has elapsed since the start of charging of the capacitor 27. In other words, the condition: Vc > Vs is satisfied in the period from when charging of the capacitor 27 has started to when the duration $t_{ON}$ ends. Thus, the comparator 22 outputs the high-level signal. The condition: Vc ≤ Vs is satisfied in the period from when the duration $t_{ON}$ has ended to when the capacitor 27 is discharged. Thus, the comparator 22 generates the low-level signal. In other words, with reference to Fig. 4, in each of the cycles T, the comparator 22 outputs the high-level signal in the duration $t_{ON}$ and the low-level signal for the rest of the period T. That is, the duration $t_{ON}$ corresponds to the ON duration.

In correspondence with the signal output by the comparator 22, the control section 18 controls switching of the first to fourth switching elements Q1 to Q4 in accordance with the duty cycle corresponding to the DC voltage $V_H$ at the aforementioned timings. Specifically, as long as the comparator 22 outputs the high-level signal, the first and fourth switching elements Q1, Q4 or the second and third switching elements Q2, Q3 are maintained in an ON state. Otherwise, the first to fourth switching elements Q1 to Q4 are all turned off. As a result, the DC voltage ($V_H$) supplied from the DC/DC converter section 12 is inverted into the AC voltage ($V_{AC}$) of 60 Hz with the effective value of 100 V. The AC voltage ($V_{AC}$) is then output from the AC inverter 11.

A method for designing the duty cycle setting section 19 will hereafter be explained.

As illustrated in Fig. 3, the output waveform ($V_{AC}$) of the AC inverter 11, which is the output waveform of the DC/AC inverter section 13, is a rectangular wave. The control section 18 adjusts the ON durations, or the ON durations ($t1_{ON}$, $t2_{ON}$), of the first to fourth switching elements Q1 to Q4 in correspondence with the DC voltage $V_H$, which is input to the DC/AC inverter section 13. In this manner, the effective value of the output voltage of the AC inverter 11 is maintained constant. The controller 14 operates to turn on and off the set of the first and fourth switching elements Q1, Q4 and the set of the second and third switching elements Q2, Q3 alternately in accordance with the predetermined cycle 2T (60 Hz). In Fig. 3, the set of the first and fourth switching elements Q1, Q4 is maintained in the ON state if the $V_{AC}$ is a positive value ($+V_H$). The set of the second and third switching elements Q2, Q3 is maintained in the ON state if the $V_{AC}$ is a negative value ($-V_H$).

The effective value Vrms of the output voltage of the AC inverter 11, the period T, the ON duration $t_{ON}$, and the DC voltage $V_H$ are mutually related as represented by the following equation. In the following explanation, the duty cycle represents the proportion of the ON duration $t_{ON}$ with respect to the period T. That is, the reference period of the duty cycle $t_{ON}/T$ is different from the reference periods of the duty cycle $t1_{ON}/2T$ of the set of the first and fourth switching elements Q1, Q4 and the duty cycle $t2_{ON}/2T$ of the set of the second and third switching elements Q2, Q3.

$$V_{rms}{}^2 = \frac{1}{T}\int_0^{t_{ON}} V_H{}^2 dt = \frac{t_{ON}}{T} V_H{}^2 \quad \dots \quad (1)$$

The equation (1) indicates the relationship represented by the equation: $t_{ON}/T = Vrms^2/V_H{}^2$. Thus, if the duty cycle $t_{ON}/T$ is changed in inverse proportion to $V_H{}^2$, the effective value Vrms of the output voltage of the AC inverter 11 is maintained constant.

In the first embodiment, the duty cycle $t_{ON}/T$ is set using the charging curve G generated by the CR circuit (the integrating circuit 29). If the voltage supplied to the two ends of the capacitor 27 when the period setting switching element 28 is turned on in accordance with the period T is Vs, the voltage of the second constant voltage source 26 is Vamp, the resistance value of the fifth resistor R5 is R, and the capacity of the capacitor 27 is C, the voltage Vs is represented by the following equation. The voltage Vs is then input to the inverting input terminal of the comparator 22. The value CR is the time constant of the integrating circuit 29, which forms the CR circuit.

$$V_s = V_{amp}(1 - e^{-\frac{t}{CR}}) \quad \dots \quad (2)$$

Fig. 5 represents the charging curve G obtained by the voltage Vs represented by the equation (2).

The reference voltage Vc determined by the DC voltage $V_H$ is represented by the equation: Vc = $b - a \times V_H$ in which the values $a$ and $b$ are constants. The values $a$, $b$ are determined by the first to fourth resistors R1 to R4 of the signal generating circuit 20 and the first constant voltage source 25.

If the condition: Vc > Vs is satisfied for the time corresponding to $t_{ON}$, the following equation holds true.

$$b - a \times V_H = V_{amp}(1 - e^{-\frac{t_{ON}}{CR}}) \quad \dots \quad (3)$$

The equation (3) is modified to obtain the following equation.

$$t_{ON}/T = -(CR/T) \times \log[(a \times V_H + Vamp - b)/Vamp] \quad \dots \quad (4)$$

The values $a$, b, Vamp, C, and R of the equation (4) are referred to as designing parameters. If the designing parameters are selected appropriately, the difference (the error) between the theoretical value and the design value of the duty cyclewill be small.

Specifically, the theoretical value of the duty cycle that causes the effective value of the output voltage ($V_{AC}$) of the AC inverter 11 to become 100 V is calculated for every 0.1 V of $V_H$ from 106 V to 155 V. In the first embodiment, the acceptable range of fluctuation of the DC voltage $V_H$ is 106 V to 155 V. Such range is determined in accordance with, for example, a range of the DC voltage $V_H$ that can be inverted to an acceptable range of AC voltage $V_{AC}$ designated by specifications of a product.

Then, the designing parameters ($a$, $b$, Vamp, C, R) are set to initial values. The design values of the duty cycle determined by given designing parameters are calculated for every 0.1 V of $V_H$ from 106 V to 155 V.

Subsequently, the difference between the theoretical value of the duty cycle and the design value of the duty cycle determined in correspondence with the designing parameters is calculated for every 0.1 V of $V_H$ from 106 V to 155 V. The proportion of the difference (the error) between the theoretical value and the design value of the duty cycle with respect to the theoretical value (the ratio of the aforementioned difference to the theoretical value) is raised to the second power for every case and the obtained values are added together. While varying the designing parameters by small amounts, the square sum of the proportion of the difference with respect to the theoretical value is calculated for every case. In this manner, the values of the designing parameters that result in a minimum value of such square sum are determined. That is, the square integral of the proportion of the error with respect to the theoretical value is employed as an evaluation function. The values of the designing parameters that result in a minimum value of such evaluation function are optimal values of the designing parameters.

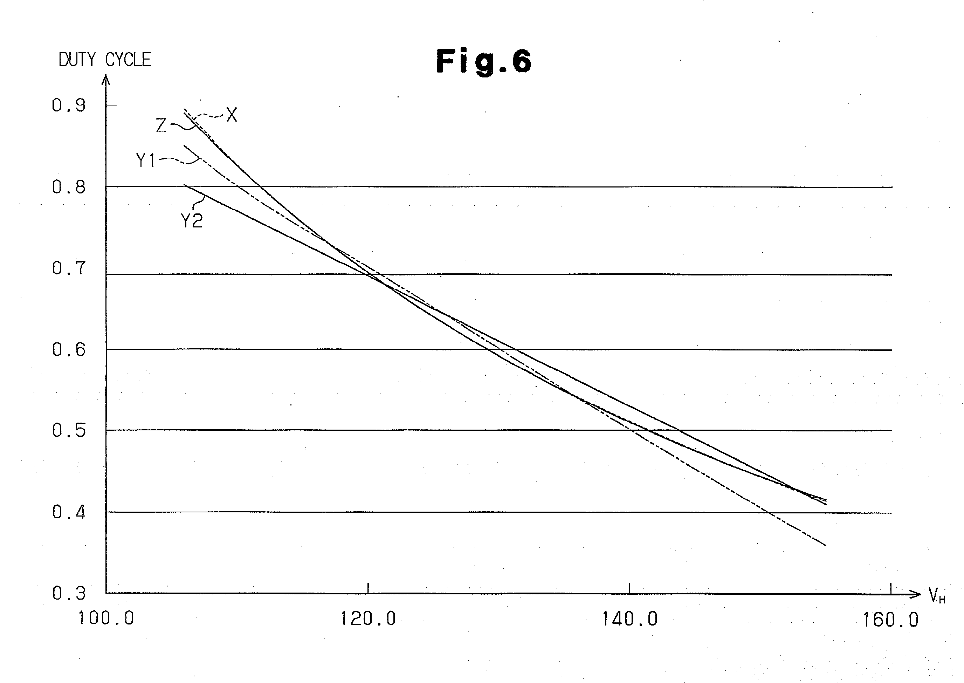

As a result, if the value $a$ is 0.0179, the value b is 4.9900, Vamp is 3.4850, and CR/T is 0.410, the equation (4) represents the actual curve X, which is represented by the broken lines in Fig. 6. In Fig. 6, the theoretical curve Z representing the theoretical value of the duty cycle is indicated by the solid line. The actual curve X substantially coincides with the theoretical curve Z. The maximum value of the proportion of the error between the actual curve X and the theoretical curve Z with respect to the theoretical curve Z is 0.61%.

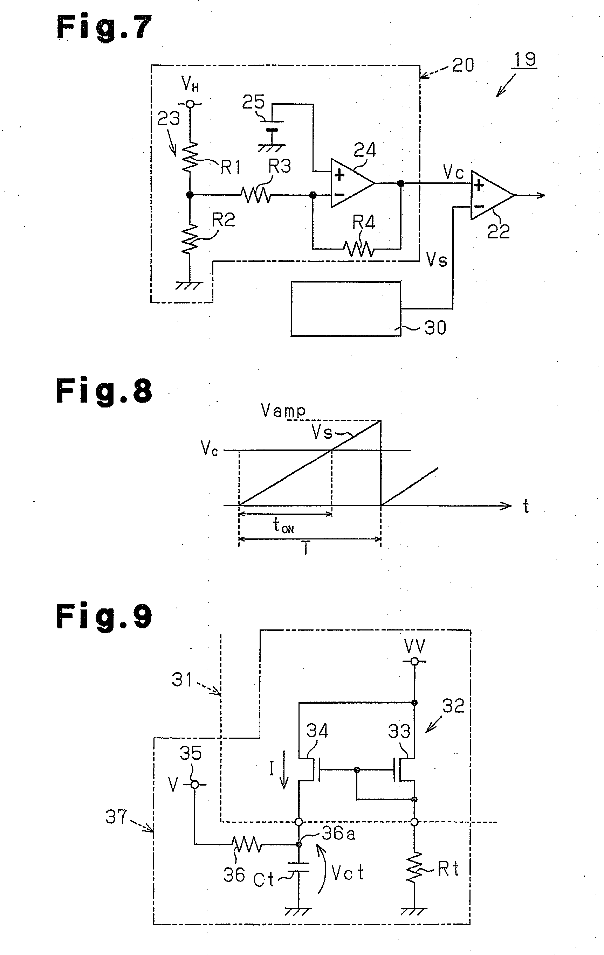

A first comparative example will now be explained. In the first comparative example, an equation for setting the duty cycle is determined using a triangular wave, more specifically, a sawtooth wave, in accordance with a conventional design method. Referring to Fig. 7, the curve generating circuit 21 is replaced by a triangular wave generating circuit 30.

Fig. 8 represents the waveform output by the triangular wave generating circuit 30. The voltage Vs input to the inverting input terminal of the comparator 22 of the first comparative example is represented by the equation: Vs = (t/T) Vamp. The value Vamp is the peak voltage of the triangular wave output by the triangular wave generating circuit 30.

Similarly to the above-described case, the reference voltage Vc determined by the DC voltage $V_H$ is represented by the equation: Vc = b - a $\times$ $V_H$. In this case, the following equation holds true instead of the equation (3).

$$b - a \times V_H = (t_{ON}/T) Vamp \quad \dots \quad (5)$$

The equation (5) is modified to obtain the following equation.

$$t_{ON}/T = (b - a \times V_H)/Vamp \quad \dots (6)$$

If the values *a, b,* and Vamp are selected appropriately, the equation (6) is set in such a manner that the error between the theoretical value and the design value of the duty cycle is reduced.

In the first comparative example, the theoretical value of the duty cycle is calculated in such a manner that the effective value of the output voltage ($V_{AC}$) of the AC inverter 11 becomes 100 V, while $V_H$ is changed by 0.1 V from 106 V to 155 V, in the same manner as the first embodiment.

Next, the designing parameters (a, b, Vamp) are set to initial values. The duty cycle determined by given designing parameters is calculated for every 0.1 V of $V_H$ from 106 V to 155 V.

Subsequently, the difference between the theoretical value and the design value of the duty cycle is calculated for every 0.1 V of $V_H$ from 106 V to 155 V. The obtained differences are each raised to the second power and the results are added together. Then, while varying the values of the designing parameters by small amounts, the values of the designing parameters that result in the minimum value of the square sum of the difference between the theoretical value and the design value of the duty cycle are determined. In other words, the square integral of the error between the theoretical value and the design value of the duty cycle is employed as evaluation function. The values of the designing parameters that result in the minimum value of the evaluation function are defined as the optimal values of the designing parameters.

Thus, if *a*/Vamp is 0.00100 and *b*/Vamp is 1.9100, the equation (6) represents the first comparative line Y1, which is indicated by the double-dotted chain lines in Fig. 6. The maximum value of the proportion of the error between the first comparative line Y1 and the theoretical curve Z with respect to the theoretical curve Z is 13.51%. That is, if the equation for setting the duty cycle is obtained by the conventional design method, the error is greatly increased compared to the actual curve X. Specifically, the error in the case in which the equation (4) is used and the square integral of the proportion of the error of the duty cycle is employed as the evaluation function is approximately 1/22 of the error of the conventional case.

Next, a second comparative example will be explained. Also in the second comparative example, a triangular wave, more specifically, a sawtooth wave, is used. In the second comparative example, instead of the square integral of the error between the theoretical value and the design value of the duty cycle, the square integral of the proportion of the error with respect to the theoretical value is used as the evaluation function for determining the equation for setting the duty cycle. Specifically, when the equation (6) is set in such a manner that the error is reduced through appropriate selection of the values *a, b,* and Vamp, the square integral of the proportion of the error with respect to the theoretical value is used as the evaluation function. The values of the designing parameters that result in the minimum value of the evaluation function are the optimal values of the designing parameters.

As a result, when *a*/Vamp is 0.0080 and *b*/Vamp is 1.6500, the equation (6) is represented by the second comparative line Y2 indicated by the corresponding solid line in Fig. 6. The maximum value of the proportion of the error between the second comparative line Y2 and the theoretical curve Z with respect to the theoretical curve Z is 9.89%. That is, simply through replacement of the square integral of the error, which is conventionally used as the evaluation function for determining the equation for setting the duty cycle, by the square integral of the proportion of the error with respect to the theoretical value, the error is reduced by approximately 30%. Comparison between the actual curve X and the second comparative line Y2 makes it clear that the actual curve X decreases the maximum value of the error to 1/16. In other words, the maximum value of such error is reduced to 1/16 in the case in which the equation (4) is employed and the square integral of the proportion of the error with respect to the theoretical value is used as the evaluation function for determining the equation for setting the duty cycle, compared to the case in which the triangular wave is employed and the square integral of the error is used as such evaluation function.

The first embodiment has the following advantages.

(1) The AC inverter 11 has the DC/AC inverter section 13, which converts the output voltage ($V_H$) of the DC/DC converter section 12 to the AC voltage $V_{AC}$ with the rectangular wave and outputs the AC voltage $V_{AC}$. The AC inverter 11 has the control section 18, which controls switching of the first to fourth switching elements Q1 to Q4 of the DC/AC inverter section 13, and the duty cycle setting section 19. The duty cycle setting section 19 determines the duty cycle for control of the first to fourth switching elements Q1 to Q4 by the control section 18 in correspondence with the signal (Vc) based on the value of the DC voltage $V_H$ input to the DC/AC inverter section 13 and the charging curve G generated by the CR circuit (the integrating circuit 29). If the duty cycle of the first to fourth switching elements Q1 to Q4 is changed in inverse proportion to the square of the DC voltage $V_H$ input to the DC/AC inverter section 13, the effective value of the output voltage of the AC inverter 11, which outputs the rectangular wave, becomes constant.

If the duty cycle is determined using, for example, a triangular or sawtooth wave, the duty cycle changes in a linear-function-like manner with respect to the DC voltage $V_H$. The first comparative line Y1 and the second comparative line Y2 in Fig. 6 are the linear functions with respect to the DC voltage $V_H$. However, in the first embodiment, since the charging curve G generated by the CR circuit is used, the duty cycle changes with respect to the DC voltage $V_H$ in a natural-logarithm-like manner (see the actual curve X in Fig. 6). Thus, in the first embodiment, the duty cycle is easily set in such a manner that the effective value of the output voltage of the AC inverter 11 approximates to the theoretical value.

Accordingly, in the first embodiment, the width of the rectangular wave output by the DC/AC inverter section 13 is controlled simply by hardware in such a manner that effective value of the output voltage ($V_{AC}$) approximates to the theoretical value compared to the prior art, regardless of changes in the input voltage (the DC voltage $V_H$) input to the DC/AC inverter section 13.

(2) The duty cycle setting section 19 has the curve generating circuit 21, which determines the charging curve G. The curve generating circuit 21 is formed by the second constant voltage source 26, the capacitor 27, and the period setting switching element 28. The capacitor 27 is connected in series with the second constant voltage source 26 through the fifth resistor R5. The period setting switching element 28 is connected to the connection point 27a of the capacitor 27 with respect to the fifth resistor R5. The ON signal is input to the period setting switching element 28 each time the period T elapses. The period T corresponds to a half of the switching period 2T of the first to fourth switching elements Q1 to Q4 of the DC/AC inverter section 13. Thus, approximation for achieving inverse proportion of the duty cycle of the first to fourth switching elements Q1 to Q4 to the square of the DC voltage $V_H$ input to the DC/AC inverter section 13 is brought about through simple configuration.

In other words, the ON signal is input to the period setting switching element 28 in a pulse-like manner each time the period T elapses. In response to the reception of the ON signal by the period setting switching element 28, the charge in the capacitor 27 of the CR circuit is instantly discharged and charging of the capacitor 27 is resumed. The duration $t_{ON}$, or a period from when charging of the capacitor 27 is resumed to when the charged voltage of the capacitor 27 reaches the voltage of the signal (Vc) based on the value of the DC voltage $V_H$, corresponds to the ON duration of the first to fourth switching elements Q1 to Q4.

(3) The DC/AC inverter section 13, which outputs the rectangular wave, has the first to fourth switching elements Q1 to Q4. The duty cycle setting section 19 sets the duty cycle for controlling switching of the first to fourth switching elements Q1 to Q4. In the method for designing the duty cycle setting section 19, the designing parameters are set in such a manner as to minimize the proportion of the error between the theoretical value and the design value of the duty cycle with respect to the theoretical value. The design value of the duty cycle is obtained in correspondence with the designing parameters. Thus, in the first embodiment, the proportion of the error with respect to the theoretical value is minimized over the entire acceptable range of the DC voltage $V_H$ through optimization of the designing parameters, compared to the method in which the designing parameters are set in such a manner as to minimize, for example, the error between the theoretical value and the design value of the duty cycle. That is, in the first embodiment, the proportion of the error with respect to the theoretical value is minimized throughout the acceptable range of fluctuation of the DC voltage $V_H$, or $V_H$ of 106 V to 155 V.

If the error in the duty cycle is reduced over the entire acceptable range through setting of the designing parameters in such a manner as to minimize, for example, the error, the proportion of the error with respect to the theoretical value cannot be optimized. Specifically, if the error of the duty cycle is, for example, 5%, the influence by such error differs depending on whether the value of the duty cycle is great or small. However, in the first embodiment, the proportion of the error with respect to the theoretical value is minimized over the entire acceptable range through setting of the designing parameters in such a manner as to minimize the proportion of the error with respect to the theoretical value.

(4) In the method for designing the duty cycle setting section 19, the square integral of the proportion of the error between the theoretical value and the design value of the duty cycle with respect to the theoretical value is employed as the evaluation function. The values of the designing parameters that results in the minimum value of the evaluation function are defined as the optimal values of the designing parameters. Thus, in the first embodiment, the proportion of the error with respect to the theoretical value is minimized over the entire acceptable range through optimization of the designing parameters, compared to the conventional method in which, for example, the square integral (the square sum) of the error is used as the evaluation function.

That is, in the first embodiment, the error is accepted to a greater extent for greater values of the duty cycle but reduced for smaller values of the duty cycle. As a result, the proportion of the error with respect to the theoretical value is minimized over the entire acceptable range.

(5) The duty cycle is set using the signal (Vc) based on the value of the DC voltage $V_H$ and the charging curve G determined by the CR circuit (the integrating circuit 29). The equation: $(-(CR/T) \times \log[(a \times V_H + Vamp - b)/Vamp])$ is employed as the designing parameters for setting the duty cycle. The square integral of the proportion of the above-described error with respect to the theoretical value is used as the evaluation function. The value T is a half of the switching period 2T of the first to fourth switching elements Q1 to Q4. The values *a* and *b* are constants. $V_H$

is the DC voltage input to the DC/AC inverter section 13 and Vamp is the voltage applied to the CR circuit. In the case in which the effective value of the output voltage of the AC inverter 11 is controlled to become 100 V as the input voltage ($V_H$) input to the DC/AC inverter section 13 changes from 106 V to 155 V, the maximum value of the error of the duty cycle of the first embodiment is reduced to approximately 1/16 of that of the case in which the triangular wave, for example, is used instead of the charging curve G.

(6) In the second comparative example, the duty cycle is set using the signal (Vc) based on the value of the DC voltage $V_H$ and the triangular wave. Further, the equation: $(b - a \times V_H)$/Vamp is used as the designing parameters. The square integral of the proportion of the error with respect to the theoretical value is used as the evaluation function. In the case in which the effective value of the output voltage of the AC inverter 11 is controlled to become 100 V as the DC voltage $V_H$ input to the DC/AC inverter section 13 changes from 106 V to 155 V, the second comparative line Y2 of the second comparative example decreases the maximum value of the error of the duty cycle by approximately 30% of, for example, the first comparative line Y1 using the square integral of the error as the evaluation function. Specifically, in the second comparative example, the triangular wave generating circuit 30 is provided instead of the curve generating circuit 21, as in the case of the PWM control. Further, the designing parameters are optimized using the square integral of the proportion of the error with respect to the theoretical value, instead of the square integral of the error, as the evaluation function, which is greatly effective.

(7) The DC/DC converter section 12 outputs the DC voltage ($V_H$) corresponding to the voltage of the battery 15. Thus, compared to, for example, the case in which the DC/DC converter section 12 outputs a constant value of a DC voltage regardless of fluctuation of the voltage of the battery 15, the first embodiment makes it unnecessary to perform feedback control and simplifies the configuration.

(8) When the square integral of the proportion of the error between the theoretical value and the design value of the duty cycle with respect to the theoretical value is used as the evaluation function, the maximum value of the proportion of the error caused by the second comparative line Y2 using the triangular wave as the voltage Vs is 9.89%. The maximum value of the proportion of the error with respect to the theoretical value caused by the actual curve X using the charging curve G of the CR circuit (the integrating circuit 29) as the voltage Vs is 0.61%. As a result, in the first embodiment using the actual curve X, the maximum value of the proportion of the error is reduced to 9% or less throughout the acceptable range of fluctuation of the DC voltage $V_H$, which is 106 V to 155 V.

In other words, the duty cycle setting section 19 sets the duty cycle in such a manner that the error of the effective value of the output voltage of the DC/AC inverter section 13 with respect to the target value becomes 9% or less for any value that falls in the acceptable range of fluctuation of the DC voltage $V_H$ ($V_H$ = 106 V to 155 V). Thus, the effective value of the output voltage of the DC/AC inverter section 13 is output with the error not greater than 9% with respect to the theoretical value.

Fig. 9 illustrates a second embodiment of the present invention. Like or the same reference numerals are given to those components that are like or the same as the corresponding components of the first embodiment, and detailed explanations are omitted.

Referring to Fig. 9, a second curve generating circuit 37 is a charging curve generating circuit of the second embodiment. The second curve generating circuit 37 has a power source control IC 31. The power source control IC 31 is a conventional switching power source control IC having a triangular wave generating circuit. The power source control IC 31 has an internal power source VV, a current mirror circuit 32, a comparator 22 (not shown), and a discharging circuit (not shown). Specifically, the comparator 22 is arranged in the interior of the power source control IC 31. The current mirror circuit 32 has a first transistor 33 and a second transistor 34. The first and second transistors 33, 34 are connected to the internal power source VV. The first transistor 33 is grounded through a sixth resistor Rt. The second transistor 34 is connected to a second capacitor Ct. A constant electric current, the level of which is determined in correspondence with the resistance value of the sixth resistor Rt, flows from the internal power source VV to the second capacitor Ct. In other words, an electric current the level of which is equal to the level of the current flowing in the sixth resistor Rt or a level obtained by multiplying the level by a constant number flows in the second capacitor Ct.

For example, in a circuit employing only a conventional power source control IC 31, the second capacitor Ct is charged with a constant current. In other words, conventionally, when the voltage at each of the two ends of the second capacitor Ct reaches a predetermined value, the discharging circuit (not shown) of the power source control IC 31 discharges the second capacitor Ct. Thus, the voltage at each end of the second capacitor Ct represents a cyclic triangular wave.

However, the second curve generating circuit 37 shown in Fig. 9 includes a seventh resistor 36. The seventh resistor 36 is connected to the second capacitor Ct of the triangular wave generating circuit and a constant voltage source 35. In other words, the second capacitor Ct and the seventh resistor 36 form a CR circuit and thus the second curve generating circuit 37. In this manner, the second curve generating circuit 37 is formed by the internal power source VV, the current mirror circuit 32, the sixth resistor Rt, the second capacitor Ct, the seventh resistor 36, and the constant voltage source 35. A connection point 36a of the seventh resistor 36 with respect to the second capacitor Ct is connected to the inverting input terminal of the comparator 22 (not shown). That is, the voltage Vct at each end of the second capacitor Ct is applied to the inverting input terminal of the comparator 22.

If the voltage of the constant voltage source 35 is V, the resistance value of the seventh resistor 36 is R, the capacity of the second capacitor Ct is Ct, and the current flowing in the second transistor 34 is I, the voltage Vct at each end of the second capacitor Ct, or the second charging curve, is represented by the following equation.

$$Vct = (V + IR)(1 - e^{-\frac{t}{CtR}}) \quad \dots \quad (7)$$

That is, the second curve generating circuit 37 having the CR circuit is formed through addition of the seventh resistor 36 to the conventional power source control IC 31. In other words, even if the conventional power source control IC 31 is employed, the second charging curve is generated and the duty cycle is set to a desirable value.

The illustrated embodiments may be modified as follows.

Contrastingly to the illustrated embodiments, the output (Vc) of the signal generating circuit 20 may be input to the inverting input terminal of the comparator 22 and the output (Vs) of the curve generating circuit 21 may be input to the non-inverting input terminal. In this case, the comparator 22 outputs a signal in accordance with the levels opposite to those of the illustrated embodiments. Specifically, if the condition: $Vc \leq Vs$ is satisfied, the comparator 22 outputs a high-level signal and if the condition: $Vc > Vs$ is satisfied, the comparator 22 outputs a low-level signal. In other words, the control section 18 controls switching of the first to fourth switching elements Q1 to Q4 in such a manner that the period in which the low-level signal is output by the comparator 22 corresponds to the ON duration of each of the first to fourth switching elements Q1 to Q4.

The effective value of the output voltage of the AC inverter 11 is not restricted to 100 V but may be other voltages of commercial power sources, such as 120 V, 220 V, 230V, or 240 V.

Any type of evaluation function may be employed in optimization of the designing parameters, as long as the proportion of the error between the theoretical value and the design value of the duty cycle with respect to the theoretical value is evaluated through such evaluation function. In other words, the evaluation function does not necessarily have to be the square integral (the square sum) of the proportion of the error with respect to the theoretical value. Such evaluation function may be, for example, the sum of the absolute values of the proportion of the error or the 2nth power integral (n is an integer not smaller than 2) of the proportion of the error.

The frequency of the output voltage of the AC inverter 11 is not restricted to 60 Hz but may be, for example, 50 Hz.

The voltage of the battery 15 is not restricted to 12 V but may be, for example, 24 V or 48 V.

The first to fourth switching elements Q1 to Q4 are not restricted to the MOSFETs but may be other switching elements such as IGBTs.

The inverter device of the present invention is not restricted to use in a vehicle but may be employed for other purposes.

In setting of the designing parameters of the illustrated embodiments, the designing parameters are optimized through minimization of the evaluation function. However, the designing parameters may be calculated in such a manner that the evaluation function falls in a desirable range determined by specifications of a product.

An inverter device (11) has a DC/AC inverter section (13) that converts input DC voltage ($V_H$) into AC voltage ($V_{AC}$) with a rectangular wave and outputs the AC voltage ($V_{AC}$). A duty cycle setting section (19) sets a duty cycle ($t_{ON}/T$) for controlling turning on and off of a switching element (Q1, Q2, Q3, Q4) of the DC-AC inverter section (13) by a controller (18). The duty cycle setting section (19) determines the duty cycle ($t_{ON}/T$) using a signal (Vc) based on the value of the DC voltage ($V_H$) and a charging curve (G) determined by a CR circuit (29). Accordingly, regardless of changes in the input voltage ($V_H$), the effective value of the output voltage ($V_{AC}$) approximates to a theoretical value compared to the conventional art.

**Claims**

1. An inverter device (11) being **characterized by**:

   a DC/AC inverter section (13) that converts an input DC voltage ($V_H$) into an AC voltage ($V_{AC}$) of a rectangular wave and outputs the AC voltage ($V_{AC}$), the DC/AC inverter section (13) having a switching element (Q1, Q2, Q3, Q4);

a controller (18) that controls turning on and off of the switching element (Q1 to Q4); and

a duty cycle setting section (19) that sets a duty cycle ($t_{ON}/T$) for control of the switching element (Q1 to Q4) by the controller (18), the duty cycle setting section (19) having a CR circuit (29), the duty cycle setting section (19) determining the duty cycle ($t_{ON}/T$) using a signal (Vc) based on the value of the DC voltage ($V_H$) and a charging curve (G) determined by the CR circuit (29).

2. The inverter device (11) according to claim 1, **characterized by** a DC/DC converter section (12), wherein the DC/DC converter section (12) generates the DC voltage ($V_H$) by converting a power supplied from a DC voltage source (15) and supplies the DC voltage ($V_H$) to the DC/AC inverter section (13).

3. The inverter device (11) according to claim 1 or 2, **characterized in that** the duty cycle setting section (19) sets the duty cycle ($t_{ON}/T$) in such a manner that an error of an effective value of an output voltage of the DC/AC inverter section (13) with respect to a target value becomes 9% or less for any value that falls in an acceptable range of fluctuation of the DC voltage ($V_H$).

4. The inverter device (11) according to any one of claims 1 to 3, **characterized in that** the duty cycle setting section (19) has a curve generating circuit (21) that determines the charging curve (G), the curve generating circuit (21) including:

a constant voltage source (26);

a capacitor (27) connected in series with the constant voltage source (26) through a resistor (R5); and

a period setting switching element (28) connected to a connection point (27a) of the capacitor 27 with respect to the resistor (R5), an ON signal being input to the period setting switching element (28) each time a period (T) elapses, the period (T) being a half of a switching period (2T) of the switching element (Q1 to Q4).

5. The inverter device (11) according to any one of claims 1 to 4, **characterized in that** the duty cycle setting section (19) has a comparator (22), the comparator (22) comparing a voltage of a signal (Vc) based on the DC voltage ($V_H$) with a voltage (Vs) determined by the charging curve (G), and

wherein a period in which the voltage (Vs) determined by the charging curve (G) is less than a voltage of the signal (Vs) based on the DC voltage ($V_H$) is set as an ON duration ($t_{ON}$) of the switching element (Q1 to Q4).

6. A method for designing a duty cycle setting section (19) of an inverter device (11), the inverter device (11) including a DC/DC converter section (12) and a DC/AC inverter section (13), the DC/DC converter section (12) generating a DC voltage ($V_H$) by converting a power supplied from a DC voltage source (15), the DC/AC inverter section (13) converting the DC voltage ($V_H$) into an AC voltage ($V_{AC}$) with a rectangular wave and outputting the AC voltage ($V_{AC}$), the duty cycle setting section (19) setting a duty cycle ($t_{ON}/T$) for controlling turning on and off of a switching element (Q1, Q2, Q3, Q4) of the DC/AC inverter section (13), the method being **characterized by:**

calculating a theoretical value of the duty cycle ($t_{ON}/T$) in such a manner that an effective value of an output voltage ($V_{AC}$) becomes a target value when the DC voltage ($V_H$) is changed in a predetermined range;

calculating a design value of the duty cycle determined in correspondence with a designing parameter (C, R, *a, b,* Vamp) for setting the duty cycle ($t_{ON}/T$) for each one of the values in the predetermined range;

determining a proportion of an error between the theoretical value and the design value of the duty cycle ($t_{ON}/T$) with respect to the theoretical value; and

setting the designing parameter (C, R, *a, b*, Vamp) in such a manner that the proportion falls in a target range for each one of the values in the predetermined range.

7. The method according to claim 6, **characterized by:**

using, as an evaluation function, a value obtained by integrating, over the predetermined range, a square of the proportion of the error between the theoretical value and the design value of the duty cycle ($t_{ON}/T$) with respect to the theoretical value ; and

using a value of the designing parameter (C, R, *a, b,* Vamp) that results in a minimum value of the evaluation function as an optimal value of the designing parameter.

8. The method according to claim 7, **characterized by**:

determining the duty cycle ($t_{ON}$/T) using the following equation; and
using the values C, R, *a, b,* and Vamp of the equation each as the designing parameter,

wherein the equation is $-(CR/T) \times \log[(a \times V_H + Vamp - b)/Vamp]$, and
wherein the value CR is a time constant of a CR circuit (29), the value T being a half of a period (2T) of the switching element (Q1 to Q4), the values *a* and *b* each being a constant, the value $V_H$ being a value of the DC voltage, the value Vamp being a voltage applied to the CR circuit (29).

9. The method according to claim 7, **characterized by:**

setting the duty cycle ($t_{ON}$/T) using a signal (Vc) based on the DC voltage $V_H$ and an output of a triangular wave generating circuit (30); and
using $(b - a \times V_H)$/Vamp as the designing parameter,

wherein the value T is a half of the period (2T) of the switching element (Q1 to Q4), the values *a* and *b* each being a constant, the value $V_H$ being a value of the DC voltage ($V_H$), the value Vamp being a peak voltage of a triangular wave output by the triangular wave generating circuit (30).

# Fig.1

# Fig.2

# Fig.3

# Fig.4

# Fig.5

# Fig.6

# Fig.7

# Fig.8

# Fig.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000209867 A